# EUROPEAN PATENT APPLICATION

(11) **EP 4 765 210 A1**
(43) Date of publication of application: **24.06.2026**
(21) Application number: 24855361.2
(22) Date of filing: 15.05.2024
(51) Int. Cl.: H01M 4/04, H01M 4/139, B01F 33/82

(54) **HOMOGENIZATION METHOD FOR POSITIVE ELECTRODE MATERIAL**

(30) Priority: 22.08.2023 CN 202311066355
(71) Applicant: SVOLT Energy Technology Co., Ltd., Changzhou, Jiangsu 213200 (CN)
(72) Inventor: LU, Zhang, hangzhou, Jiangsu 213200 (CN); MA, Kexin, hangzhou, Jiangsu 213200 (CN); WAN, Ning, hangzhou, Jiangsu 213200 (CN); ZHANG, Linlin, hangzhou, Jiangsu 213200 (CN); LI, Minglu, hangzhou, Jiangsu 213200 (CN); LIU, Jing, hangzhou, Jiangsu 213200 (CN)
(74) Representative: Michalski Hüttermann & Partner mbB
(86) International application number: PCT/CN2024/093494
(87) International publication number: WO 2025/039631

(57) **Abstract**

A homogenization method for a positive electrode material, comprising the following steps: S1, uniformly mixing a binder and a solvent, so as to obtain a first adhesive solution; S2, separately performing electrification treatment on a positive electrode active material and a conductive agent, so as to obtain a positive electrode active material having a same type of charge and a conductive agent having a same type of charge; S3, carrying out ultrasonic treatment and stirring treatment sequentially on the first adhesive solution, a conductive paste and the conductive agent having the same type of charge, so as to obtain a second adhesive solution; S4, uniformly mixing the positive electrode active material having the same type of charge, the second adhesive solution and the solvent, so as to obtain a positive electrode paste. The homogenization method for a positive electrode material improves the dispersion effect, reduces particle agglomeration, and can obtain uniform and stable positive electrode pastes. Additionally, the method involves simple steps, requires short time and achieves high efficiency.

## Description

### CROSS-REFERENCE TO RELATED APPLICATIONS

The present application claims the priority to the Chinese Patent Application No. 202311066355.6, entitled "HOMOGENIZATION METHOD FOR POSITIVE ELECTRODE MATERIAL", filed with the China National Intellectual Property Administration on August 22, 2023, the entire contents of which are incorporated herein by reference.

### TECHNICAL FIELD

The present disclosure relates to the technical field of homogenization of battery positive electrode materials, in particular to a homogenization method for a positive electrode material.

### BACKGROUND ART

The preparation of positive electrode paste for lithium batteries mainly comprises two processes, namely the wet process and the dry process, which involves a series of technological procedures such as mixing, dissolving and dispersing between liquid and liquid materials as well as liquid and solid materials, and this process is accompanied by changes in temperature, viscosity, environment and other factors.

The wet homogenization process generally involves preparing an adhesive solution first, then adding a conductive agent and a dispersant into the adhesive solution for dispersion, subsequently adding active materials in batches for high-speed stirring and dispersion, and finally adding an appropriate amount of solvent to adjust the viscosity. This process has a wide application range. However, due to the large specific surface area of the conductive agent, it tends to agglomerate, resulting in poor dispersibility, and it is prone to absorb solvents, leading to poor fluidity of the solvents. Even through the active materials are added in batches, it is still difficult to achieve a state of uniform dispersion, which ultimately results in the positive electrode paste having high fineness and viscosity, long homogenization time, and low production efficiency.

The dry process involves premixing powder materials such as active materials and conductive agents first, then gradually adding solvents for mixing and dispersion, and finally adding solvents to adjust the viscosity to the level required for coating. This process requires a relatively short time, but the prepared positive electrode paste has low viscosity and poor stability, is difficult to apply to different materials, and is likely to affect the consistency between electrode sheets of different batches.

### SUMMARY

The objective of the present disclosure is to provide a homogenization method for a positive electrode material, which solves all or part of the problems existing in the prior art that particles are prone to agglomeration during the homogenization of positive electrode materials and the obtained paste has poor uniformity and stability.

To achieve the above objective of the present disclosure, the following technical solutions are adopted:

The present disclosure provides a homogenization method for a positive electrode material, comprising the following steps:
S1. uniformly mixing a binder and a solvent, so as to obtain a first adhesive solution;
S2. performing electrification treatment on a positive electrode active material and a conductive agent respectively, so as to obtain a positive electrode active material having a same type of charge and a conductive agent having a same type of charge;
S3. carrying out ultrasonic treatment and stirring treatment sequentially on the first adhesive solution, a conductive paste and the conductive agent having the same type of charge, so as to obtain a second adhesive solution;
S4. uniformly mixing the positive electrode active material having the same type of charge, the second adhesive solution and the solvent, so as to obtain a positive electrode paste.

Further, step S1 includes at least one of the following features (1) to (4):
(1) the binder comprises polyvinylidene fluoride;
(2) the solvent comprises N-methylpyrrolidone and/or N,N-dimethylformamide;
(3) the first adhesive solution has a solid content of 5% to 9%; and
(4) the first adhesive solution has a viscosity of 3000 to 5000 mPa•s.

Further, in step S1, the uniformly mixing comprises a stirring treatment.

Further, the stirring treatment has a revolution speed of 10 to 60 rpm, a rotation speed of 2500 to 4000 rpm and a vacuum degree of < -80 kPa; and a duration of the stirring treatment is 160 to 240 min.

Further, in step S2, the positive electrode active material comprises at least one of lithium iron phosphate, lithium cobalt oxide, lithium nickel cobalt manganese oxide and lithium manganese oxide; and/or,
the positive electrode active material has a particle size of 0.2 to 20 µm.

Further, step S2 includes at least one of the following features (1) to (3):
(1) the conductive agent comprises conductive carbon black and/or acetylene black;
(2) the conductive agent has a particle size of 10 to 100 nm; and
(3) the conductive agent has a specific surface area of 40 to 130 m2/g.

Further, in step S2, a charge-to-mass ratios of the positive electrode active material having the same type of charge and the conductive agent having the same type of charge are each independently ≥ 2.4×10⁻³ µC/g.

Further, in step S3, the conductive paste comprises carbon nanotube conductive paste; and/or,
the conductive paste has a solid content of 2% to 8%.

Further, in step S3, the ultrasonic treatment is carried out at a temperature of 20 to 50 °C and a frequency of 20 to 50 kHz; and a duration of the ultrasonic treatment is 30 to 80 min; and/or,
the stirring treatment has a revolution speed of 10 to 60 rpm, a rotation speed of 2500 to 5000 rpm and a vacuum degree of < -80 kPa; and a duration of the stirring treatment is 20 to 40 min.

Further, in step S4, the uniformly mixing comprises a stirring treatment.

Further, the stirring treatment has a revolution speed of 10 to 60 rpm, a rotation speed of 2500 to 5000 rpm and a vacuum degree of < -80 kPa; and a duration of the stirring treatment is 50 to 120 min.

Further, in step S4, the positive electrode paste has a solid content of 65% to 70%; and/or,
a fineness of the positive electrode paste is < 10.

Compared with the prior art, the beneficial effects of the present disclosure are as follows:
1. The homogenization method for a positive electrode material provided by the present disclosure shortens the homogenization time, improves production efficiency, reduces particle agglomeration, and enhances the uniformity and stability of the paste. Meanwhile, no dispersant needs to be added during the homogenization process, which is conducive to improving the energy density of the battery.
2. The homogenization method for a positive electrode material of the present disclosure requires a short total time of 5 to 7 hours and has high production efficiency. It can obtain a uniformly fine and highly stable positive electrode paste with a fineness of less than 10 and a viscosity of 7000 to 8000 mPa•s, thus significantly reducing the viscosity rebound of the positive electrode paste.
3. The homogenization method for a positive electrode material of the present disclosure has a wide application range and is applicable to lithium-ion battery positive electrode materials. Especially for positive electrode paste systems containing carbon nanotubes, the homogenization method of the present disclosure can improve the dispersion effect and obtain a uniform and stable positive electrode paste.

### BRIEF DESCRIPTION OF DRAWINGS

To clearly illustrate the technical solutions in the specific embodiments of the present disclosure or in the prior art, a brief description of the accompanying drawings required for describing the specific embodiments or the prior art will be given below. Obviously, the accompanying drawings in the following description are some embodiments of the present disclosure, and for those of ordinary skill in the art, other accompanying drawings can also be obtained based on these accompanying drawings without exerting creative labor.

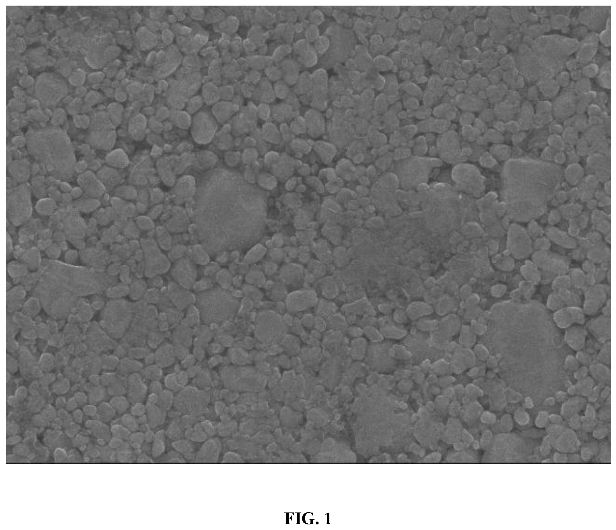

Fig. 1 is a SEM image of the positive electrode sheet after coating the positive electrode paste according to Example 4 of the present disclosure.

### DETAILED DESCRIPTION OF EMBODIMENTS

The present disclosure is implemented through the following specific embodiments: A lithium-ion battery separator comprises a modified fluorinated polyolefin polymer, wherein the polymer is obtained by polymerization reaction of fluorinated polyolefin and modified monomers, wherein the modified monomers comprise at least one of imidazole and its derivatives, olefin-substituted pyridine and its derivatives.

It should be noted that "containing olefin-substituted imidazole and its derivatives" in the present disclosure refers to compounds that comprise at least one olefin substituent based on imidazole and its derivatives. These compounds can be directly purchased by those skilled in the art as needed or synthesized by substitution using imidazole and its derivatives as raw materials. Similarly, "containing olefin-substituted pyridine and its derivatives" refers to compounds that comprise at least one olefin substituent based on pyridine and its derivatives. These can also be directly purchased by those skilled in the art as needed or synthesized by substitution using pyridine and its derivatives as raw materials.

The following specifically describes a homogenization method for a positive electrode material according to the embodiments of the present disclosure.

In some embodiments of the present disclosure, a homogenization method for a positive electrode material is provided, comprising the following steps:
S1. Uniformly mixing a binder and a solvent, so as to obtain a first adhesive solution;
S2. Separately performing electrification treatment on a positive electrode active material and a conductive agent, so as to obtain a positive electrode active material having a same type of charge and a conductive agent having a same type of charge;
S3. Carrying out ultrasonic treatment and stirring treatment sequentially on the first adhesive solution, a conductive paste and the conductive agent having the same type of charge, so as to obtain a second adhesive solution;
S4. Uniformly mixing the positive electrode active material having the same type of charge, the second adhesive solution and the solvent, so as to obtain a positive electrode paste.

The homogenization method for a positive electrode material provided by the present disclosure solves the problem that particles are prone to agglomeration during the homogenization process; shortens the homogenization time and improves production efficiency; and can obtain a uniform and stable positive electrode paste. No dispersant needs to be added during the homogenization process, which is conducive to improving the energy density of the battery.

In the present disclosure, by separately performing electrification treatment on the positive electrode active material and the conductive agent to make them carry the same type of charge, the electrostatic repulsion between charged particles is utilized to disperse the particles, thereby reducing the agglomeration of both the positive electrode active material and the conductive agent. Meanwhile, through ultrasonic treatment, the local high temperature, high pressure, strong shock waves, microjets and other effects generated during ultrasonic cavitation are used to significantly weaken the nano-interaction energy between nanoparticles for further dispersion. Thus, the homogenization time is shortened, the dispersion effect is improved, and a uniform and stable positive electrode paste can be obtained.

In some embodiments of the present disclosure, a homogenization method for a positive electrode material comprises the following steps:
S1. Mixing a binder and a solvent and performing high-speed stirring, so as to obtain a first adhesive solution;
S2. Performing corona electrification treatment on a positive electrode active material by means of plasma equipment, so as to obtain a positively charged positive electrode active material; performing corona electrification treatment on a conductive agent by means of plasma equipment, so as to obtain a positively charged conductive agent;
S3. Mixing the first adhesive solution, a carbon nanotube conductive paste and the positively charged conductive agent, and then carrying out ultrasonic treatment and high-speed stirring sequentially, so as to obtain a second adhesive solution;
S4. Mixing the positively charged positive electrode active material and the second adhesive solution, then adding a solvent and continuing high-speed stirring, so as to obtain a positive electrode paste. In step S4 of the present disclosure, an appropriate amount of solvent is added to adjust the system to the target solid content, so as to obtain the positive electrode paste.

The present disclosure adopts the steps of adhesive preparation, corona electrification treatment, ultrasonic treatment and high-speed dispersion, so as to disperse the positive electrode paste more uniformly and finely, significantly reduce the probability of agglomeration, and yield a paste with lower viscosity and higher stability.

The homogenization method for a positive electrode material of the present disclosure has a wide application range and is particularly suitable for lithium-ion battery positive electrode materials. More importantly, for positive electrode paste systems containing carbon nanotubes, homogenization is more difficult due to the addition of carbon nanotube conductive paste during the homogenization process. The homogenization method of the present disclosure can improve the dispersion effect and obtain a uniform and stable positive electrode paste.

To obtain a more uniform and stable positive electrode paste, the parameters of each step in the homogenization method for a positive electrode material of the present disclosure are further optimized, specifically as follows.

In some embodiments of the present disclosure, in step S1, the binder comprises but is not limited to polyvinylidene fluoride (PVDF).

In some embodiments of the present disclosure, in step S1, the solvent comprises N-methylpyrrolidone (NMP) and/or N,N-dimethylformamide.

In some embodiments of the present disclosure, in step S1, the first adhesive solution has a solid content of 5% to 9%; typically but not restrictively, for example, the solid content of the first adhesive solution can be 5%, 6%, 7%, 8%, 9% or a range defined by any two of the aforementioned values.

In some embodiments of the present disclosure, in step S1, the first adhesive solution has a viscosity of 3000 to 5000 mPa•s; typically but not restrictively, for example, the viscosity of the first adhesive solution can be 3000 mPa•s, 3500 mPa•s, 4000 mPa•s, 4500 mPa•s, 5000 mPa•s or a range defined by any two of the aforementioned values.

In some embodiments of the present disclosure, in step S1, uniformly mixing comprises a stirring treatment.

In some embodiments of the present disclosure, in step S1, the stirring treatment has a revolution speed of 10 to 60 rpm, a rotation speed of 2500 to 4000 rpm and a vacuum degree of < -80 kPa; typically but not restrictively, for example, the rotation speed of the stirring treatment can be 2500 rpm, 3000 rpm, 3500 rpm, 4000 rpm or a range defined by any two of the aforementioned values.

In some embodiments of the present disclosure, in step S1, the duration of the stirring treatment is 160 to 240 min; typically but not restrictively, for example, the duration of the stirring treatment can be 160 min, 180 min, 200 min, 220 min, 240 min or a range defined by any two of the aforementioned values.

In some embodiments of the present disclosure, in step S2, the positive electrode active material comprises at least one of lithium iron phosphate, lithium cobalt oxide, lithium nickel cobalt manganese oxide and lithium manganese oxide.

In some embodiments of the present disclosure, in step S2, the positive electrode active material has a particle size of 0.2 to 20 µm; typically but not restrictively, for example, the particle size of the positive electrode active material can be 0.2 µm, 0.5 µm, 1 µm, 1.5 µm, 2 µm, 5 µm, 7 µm, 10 µm, 13 µm, 15 µm, 17 µm, 20 µm or a range defined by any two of the aforementioned values.

In some embodiments of the present disclosure, in step S2, the conductive agent comprises conductive carbon black (Super-P) and/or acetylene black; the conductive agent in step S2 is in the form of solid powder.

In some embodiments of the present disclosure, in step S2, the conductive agent has a particle size of 10 to 100 nm; typically but not restrictively, for example, the particle size of the conductive agent can be 10 nm, 20 nm, 30 nm, 40 nm, 50 nm, 60 nm, 70 nm, 80 nm, 90 nm, 100 nm or a range defined by any two of the aforementioned values.

In some embodiments of the present disclosure, in step S2, the conductive agent has a specific surface area of 40 to 130 m²/g; typically but not restrictively, for example, the specific surface area of the conductive agent can be 40 m²/g, 50 m²/g, 60 m²/g, 70 m²/g, 80 m²/g, 90 m²/g, 100 m²/g, 110 m²/g, 120 m²/g, 130 m²/g or a range defined by any two of the aforementioned values.

In some embodiments of the present disclosure, in step S2, the electrification treatment comprises corona electrification treatment performed by means of plasma equipment.

In some embodiments of the present disclosure, in step S2, the charge-to-mass ratios of the positive electrode active material having the same type of charge and the conductive agent having the same type of charge are each independently ≥ 2.4×10⁻³ µC/g; the charge-to-mass ratio Q/M of the positive electrode active material having the same type of charge is ≥ 2.4×10⁻³ µC/g , and the charge-to-mass ratio Q/M of the conductive agent having the same type of charge is ≥ 2.4×10⁻³ µC/g, where Q is the charge amount of the positive electrode active material having the same type of charge or the conductive agent having the same type of charge, and M is the mass of the positive electrode active material having the same type of charge or the conductive agent having the same type of charge.

In some specific embodiments of the present disclosure, the charge-to-mass ratio of the positive electrode active material having the same type of charge is 3.5×10⁻³ µC/g to 4.5×10⁻³ µC/g, and the charge-to-mass ratio of the conductive agent having the same type of charge is 5.5×10⁻³ µC/g to 6.5×10⁻³ µC/g.

In some embodiments of the present disclosure, in step S3, the conductive paste comprises carbon nanotube conductive paste; further, the conductive paste is obtained by mixing carbon nanotubes and N-methylpyrrolidone.

In some embodiments of the present disclosure, in step S3, the conductive paste has a solid content of 2% to 8%; typically but not restrictively, for example, the solid content of the conductive paste can be 2%, 3%, 4%, 5%, 6%, 7%, 8% or a range defined by any two of the aforementioned values.

In some embodiments of the present disclosure, in step S3, the mass ratio of the binder in the first adhesive solution, the conductive paste and the conductive agent having the same type of charge is 2:1:1.

In some embodiments of the present disclosure, in step S3, the ultrasonic treatment is carried out at a temperature of 20 to 50 °C; typically but not restrictively, for example, the temperature of the ultrasonic treatment can be 20 °C, 30 °C, 40 °C, 50 °C or a range defined by any two of the aforementioned values; further preferably 40 to 50 °C.

The present disclosure adopts an appropriate temperature for ultrasonic treatment, which is conducive to the further dispersion of particles. An increase in temperature can promote the dispersion of particles, but as the temperature rises, the probability of particle collision increases, which may instead lead to particle agglomeration.

In some embodiments of the present disclosure, in step S3, the ultrasonic treatment has a frequency of 20 to 50 kHz; typically but not restrictively, for example, the frequency of the ultrasonic treatment can be 20 kHz, 30 kHz, 40 kHz, 50 kHz or a range defined by any two of the aforementioned values.

In some embodiments of the present disclosure, in step S3, the duration of the ultrasonic treatment is 30 to 80 min; typically but not restrictively, for example, the duration of the ultrasonic treatment can be 30 min, 40 min, 50 min, 60 min, 70 min, 80 min or a range defined by any two of the aforementioned values.

In some embodiments of the present disclosure, in step S3, the stirring treatment has a revolution speed of 10 to 60 rpm, a rotation speed of 2500 to 5000 rpm and a vacuum degree of < -80 kPa; typically but not restrictively, for example, the rotation speed of the stirring treatment can be 2500 rpm, 3000 rpm, 3500 rpm, 4000 rpm, 4500 rpm, 5000 rpm or a range defined by any two of the aforementioned values.

In the present disclosure, an excessively high stirring speed will cause the breakage of PVDF molecular chains and the failure of PVDF, which in turn leads to a sharp drop in paste viscosity and makes coating impossible.

In some embodiments of the present disclosure, in step S3, the duration of the stirring treatment is 20 to 40 min; typically but not restrictively, for example, the duration of the stirring treatment can be 20 min, 25 min, 30 min, 35 min, 40 min or a range defined by any two of the aforementioned values.

In some embodiments of the present disclosure, in step S4, the solvent comprises N-methylpyrrolidone and/or N,N-dimethylformamide.

In some embodiments of the present disclosure, in step S4, the mass ratio of the positive electrode active material having the same type of charge to the binder in the second adhesive solution is 96:2.

In some embodiments of the present disclosure, in step S4, uniformly mixing comprises a stirring treatment.

In some embodiments of the present disclosure, in step S4, the stirring treatment has a revolution speed of 10 to 60 rpm, a rotation speed of 2500 to 5000 rpm and a vacuum degree of < -80 kPa; typically but not restrictively, for example, the rotation speed of the stirring treatment can be 2500 rpm, 3000 rpm, 3500 rpm, 4000 rpm, 4500 rpm, 5000 rpm or a range defined by any two of the aforementioned values.

In some embodiments of the present disclosure, in step S4, the duration of the stirring treatment is 50 to 120 min; typically but not restrictively, for example, the duration of the stirring treatment can be 50 min, 60 min, 70 min, 80 min, 90 min, 100 min, 110 min, 120 min or a range defined by any two of the aforementioned values.

In some embodiments of the present disclosure, the positive electrode paste has a solid content of 65% to 70% and a fineness of < 10; typically but not restrictively, for example, the solid content of the positive electrode paste can be 65%, 66%, 67%, 68%, 69%, 70% or a range defined by any two of the aforementioned values.

In some embodiments of the present disclosure, the fineness of the positive electrode paste is ≤ 5.

In some embodiments of the present disclosure, the positive electrode paste has a viscosity of 7000 to 8000 mPa•s; typically but not restrictively, for example, the viscosity of the positive electrode paste can be 7000 mPa•s, 7100 mPa•s, 7200 mPa•s, 7300 mPa•s, 7400 mPa•s, 7500 mPa•s, 7600 mPa•s, 7700 mPa•s, 7800 mPa•s, 7900 mPa•s, 8000 mPa•s or a range defined by any two of the aforementioned values.

In some embodiments of the present disclosure, the total time of the homogenization method for a positive electrode material is 5 to 7 h.

By adopting the homogenization method for a positive electrode material of the present disclosure, a positive electrode paste with uniform consistency, good stability and a viscosity of 7000 to 8000 mPa•s can be obtained, and the method greatly reduces the viscosity rebound of the positive electrode paste.

### Example 1

The homogenization method for a positive electrode material provided in this example includes the following steps:
S1. Adding PVDF into NMP and performing high-speed stirring at a revolution speed of 15 rpm and a rotation speed of 3000 rpm for 200 min, so as to obtain a first adhesive solution with a solid content of 7% and a viscosity of 4200 mPa•s;
S2. Separately performing corona electrification treatment on lithium iron phosphate with a particle size of 0.3-6 µm and Super-P with a particle size of 20-60 nm and a specific surface area of 45-80 m²/g by means of plasma equipment, so as to obtain positively charged lithium iron phosphate with a charge-to-mass ratio of 4.0×10⁻³ µC/g and positively charged Super-P with a charge-to-mass ratio of 6.0×10⁻³ µC/g;
S3. According to the mass ratio of PVDF, carbon nanotube conductive paste and positively charged Super-P of 2:1:1, adding the first adhesive solution and carbon nanotube conductive paste into the positively charged Super-P for ultrasonic treatment carried out at a temperature of 40 °C and a frequency of 20 kHz for 70 min, followed by high-speed stirring at a revolution speed of 40 rpm and a rotation speed of 3000 rpm for 30 min, so as to obtain a second adhesive solution; wherein the carbon nanotube conductive paste is prepared by mixing carbon nanotubes and NMP, with a solid content of 4%;
S4. According to the mass ratio of positively charged lithium iron phosphate to PVDF of 96:2, adding the positively charged lithium iron phosphate into the second adhesive solution, then adding NMP and performing high-speed stirring at a revolution speed of 20 rpm and a rotation speed of 3000 rpm for 100 min, so as to obtain a positive electrode paste with a solid content of 68%.

### Example 2

The homogenization method for a positive electrode material provided in this example includes the following steps:
S1. Adding PVDF into NMP and performing high-speed stirring at a revolution speed of 20 rpm and a rotation speed of 4000 rpm for 180 min, so as to obtain a first adhesive solution with a solid content of 7% and a viscosity of 3670 mPa•s;
S2. Separately performing corona electrification treatment on lithium iron phosphate with a particle size of 0.3-6 µm and Super-P with a particle size of 20-60 nm and a specific surface area of 45-80 m²/g by means of plasma equipment, so as to obtain positively charged lithium iron phosphate with a charge-to-mass ratio of 4.0×10⁻³ µC/g and positively charged Super-P with a charge-to-mass ratio of 6.0×10⁻³ µC/g;
S3. According to the mass ratio of PVDF, carbon nanotube conductive paste and positively charged Super-P of 2:1:1, adding the first adhesive solution and carbon nanotube conductive paste into the positively charged Super-P for ultrasonic treatment carried out at a temperature of 40 °C and a frequency of 30 kHz for 30 min, followed by high-speed stirring at a revolution speed of 40 rpm and a rotation speed of 3000 rpm for 30 min, so as to obtain a second adhesive solution; wherein the carbon nanotube conductive paste is prepared by mixing carbon nanotubes and NMP, with a solid content of 4%;
S4. According to the mass ratio of positively charged lithium iron phosphate to PVDF of 96:2, adding the positively charged lithium iron phosphate into the second adhesive solution, then adding NMP and performing high-speed stirring at a revolution speed of 20 rpm and a rotation speed of 3000 rpm for 100 min, so as to obtain a positive electrode paste with a solid content of 68%.

### Example 3

The homogenization method for a positive electrode material provided in this example includes the following steps:
S1. Adding PVDF into NMP and performing high-speed stirring at a revolution speed of 20 rpm and a rotation speed of 4000 rpm for 180 min, so as to obtain a first adhesive solution with a solid content of 7% and a viscosity of 3670 mPa•s;
S2. Separately performing corona electrification treatment on lithium iron phosphate with a particle size of 0.3-6 µm and acetylene black with a particle size of 30-50 nm and a specific surface area of 50-80 m²/g by means of plasma equipment, so as to obtain positively charged lithium iron phosphate with a charge-to-mass ratio of 4.0×10⁻³ µC/g and positively charged acetylene black with a charge-to-mass ratio of 6.0×10⁻³ µC/g;
S3. According to the mass ratio of PVDF, carbon nanotube conductive paste and positively charged acetylene black of 2:1:1, adding the first adhesive solution and carbon nanotube conductive paste into the positively charged acetylene black for ultrasonic treatment carried out at a temperature of 40 °C and a frequency of 35 kHz for 40 min, followed by high-speed stirring at a revolution speed of 40 rpm and a rotation speed of 3000 rpm for 30 min, so as to obtain a second adhesive solution; wherein the carbon nanotube conductive paste is prepared by mixing carbon nanotubes and NMP, with a solid content of 4%;
S4. According to the mass ratio of positively charged lithium iron phosphate to PVDF of 96:2, adding the positively charged lithium iron phosphate into the second adhesive solution, then adding NMP and performing high-speed stirring at a revolution speed of 35 rpm and a rotation speed of 4000 rpm for 50 min, so as to obtain a positive electrode paste with a solid content of 68%.

### Example 4

The homogenization method for a positive electrode material provided in this example refers to Example 3, with the only difference that the rotation speed in step S4 is 5000 rpm.

### Example 5

The homogenization method for a positive electrode material provided in this example refers to Example 1, with the only difference that the rotation speed in step S4 is 4000 rpm.

### Example 6

The homogenization method for a positive electrode material provided in this example refers to Example 3, with the only difference that in step S3, the ultrasonic treatment is carried out at a temperature of 60 °C and the rotation speed for stirring is 2000 rpm; and in step S4, the rotation speed for stirring is 2000 rpm.

### Comparative Example 1

The homogenization method for a positive electrode material provided in this comparative example refers to Example 1, with the only difference that in step S3, the first adhesive solution and carbon nanotube conductive paste are added into the positively charged Super-P for high-speed stirring at a revolution speed of 40 rpm and a rotation speed of 3000 rpm for 100 min, so as to obtain a second adhesive solution.

### Comparative Example 2

The homogenization method for a positive electrode material provided in this comparative example includes the following steps:
S1. Adding PVDF into NMP and performing high-speed stirring at a revolution speed of 20 rpm and a rotation speed of 4000 rpm for 180 min, so as to obtain a first adhesive solution with a solid content of 7% and a viscosity of 3670 mPa•s;
S2. Mixing lithium iron phosphate with a particle size of 0.3-6 µm and acetylene black with a particle size of 30-50 nm and a specific surface area of 50-80 m²/g according to a mass ratio of 96:1, followed by performing corona electrification treatment on the mixture by means of plasma equipment, so as to obtain a positively charged mixture with a charge-to-mass ratio of 6.0×10⁻³ µC/g;
S3. According to the mass ratio of PVDF, carbon nanotube conductive paste and the positively charged mixture of 2:1:97, adding the first adhesive solution and carbon nanotube conductive paste into the positively charged mixture for ultrasonic treatment carried out at a temperature of 40 °C and a frequency of 35 kHz for 40 min, then adding NMP and performing high-speed stirring at a revolution speed of 40 rpm and a rotation speed of 3000 rpm for 80 min, so as to obtain a positive electrode paste with a solid content of 68%; wherein the carbon nanotube conductive paste is prepared by mixing carbon nanotubes and NMP, with a solid content of 4%.

### Experimental Example 1

The viscosity and fineness of the positive electrode pastes prepared in Examples 1-6 and Comparative Examples 1-2 were tested, and the results are shown in Table 1.

The test method for viscosity is as follows: Mount the viscometer to keep the horizontal bubble on the body centered within the black circle; immerse the rotor into the positive electrode paste until reaching the groove mark on the rotor shaft; click start and read the viscosity value after the reading stabilizes.

The test method for fineness is as follows: Clean the scraper and the base plate with alcohol; take one spoonful of the positive electrode paste and place it on the grindometer; place the doctor blade horizontally at the top end of the grindometer to keep it perpendicular to the surface of the grindometer; draw the doctor blade from the deep end to the shallow end of the groove at an appropriate speed; read the scale value where particles are uniformly exposed in the groove, which is the fineness of the tested sample.

**Table 1**

| | Initial Viscosity (mPa•s) | Viscosity after 4 h (mPa•s) | Fineness (µm) | Homogenization Time (h) |
|---|---|---|---|---|
| Example 1 | 7826 | 8900 | 4 | 7 |
| Example 2 | 7734 | 8857 | 5 | 6 |
| Example 3 | 7596 | 8589 | 4 | 5 |
| Example 4 | 7330 | 8299 | 3 | 5 |
| Example 5 | 7673 | 8779 | 3 | 7 |
| Example 6 | 13044 | 18002 | 20 | 5 |
| Comparative Example 1 | 10820 | 13800 | 13 | 7 |
| Comparative Example 2 | 8927 | 11330 | 8 | 5 |

The positive electrode paste prepared in Example 4 was coated onto the surface of a current collector to obtain a positive electrode sheet, which was then subjected to scanning electron microscopy (SEM) testing, and the results are shown in Figure 1.

As can be seen from Figure 1, the positive electrode sheet prepared from the positive electrode paste obtained by the homogenization method for a positive electrode material disclosed herein exhibits good particle dispersion and no abnormal agglomeration of conductive agent particles.

### INDUSTRIAL PRACTICALITY

The present disclosure provides a homogenization method for a positive electrode material, which improves the dispersion effect, reduces particle agglomeration, and yields a uniform and stable positive electrode paste. In addition, this method features simple steps, short required time and high efficiency.

## Claims

1. A homogenization method for a positive electrode material, comprising steps of:
S1, uniformly mixing a binder and a solvent, so as to obtain a first adhesive solution;
S2, performing electrification treatment on a positive electrode active material and a conductive agent respectively, so as to obtain a positive electrode active material having a same type of charge and a conductive agent having a same type of charge;
S3, carrying out ultrasonic treatment and stirring treatment sequentially on the first adhesive solution, a conductive paste and the conductive agent having the same type of charge, so as to obtain a second adhesive solution;
S4, uniformly mixing the positive electrode active material having the same type of charge, the second adhesive solution and the solvent, so as to obtain a positive electrode paste.

2. The homogenization method for a positive electrode material according to claim 1, wherein step S1 comprises at least one of the following features (1) to (4):
(1) the binder comprises polyvinylidene fluoride;
(2) the solvent comprises N-methylpyrrolidone and/or N,N-dimethylformamide;
(3) the first adhesive solution has a solid content of 5% to 9%; and
(4) the first adhesive solution has a viscosity of 3000 to 5000 mPa•s.

3. The homogenization method for a positive electrode material according to claim 1, wherein in step S1, the uniformly mixing comprises a stirring treatment.

4. The homogenization method for a positive electrode material according to claim 3, wherein the stirring treatment has a revolution speed of 10 to 60 rpm, a rotation speed of 2500 to 4000 rpm and a vacuum degree of < -80 kPa; and a duration of the stirring treatment is 160 to 240 min.

5. The homogenization method for a positive electrode material according to claim 1, wherein in step S2, the positive electrode active material comprises at least one of lithium iron phosphate, lithium cobalt oxide, lithium nickel cobalt manganese oxide and lithium manganese oxide; and/or, the positive electrode active material has a particle size of 0.2 to 20 µm.

6. The homogenization method for a positive electrode material according to claim 1, wherein step S2 comprises at least one of the following features (1) to (3):
(1) the conductive agent comprises conductive carbon black and/or acetylene black;
(2) the conductive agent has a particle size of 10 to 100 nm; and
(3) the conductive agent has a specific surface area of 40 to 130 m²/g.

7. The homogenization method for a positive electrode material according to claim 1, wherein in step S2, charge-to-mass ratios of the positive electrode active material having the same type of charge and the conductive agent having the same type of charge are each independently ≥ 2.4×10⁻³ µC/g.

8. The homogenization method for a positive electrode material according to claim 1, wherein in step S3, the conductive paste comprises carbon nanotube conductive paste; and/or, the conductive paste has a solid content of 2% to 8%.

9. The homogenization method for a positive electrode material according to claim 1, wherein in step S3, the ultrasonic treatment is carried out at a temperature of 20 to 50 °C and a frequency of 20 to 50 kHz; and a duration of the ultrasonic treatment is 30 to 80 min; and/or,
the stirring treatment has a revolution speed of 10 to 60 rpm, a rotation speed of 2500 to 5000 rpm and a vacuum degree of < -80 kPa; and a duration of the stirring treatment is 20 to 40 min.

10. The homogenization method for a positive electrode material according to claim 1, wherein in step S4, the uniformly mixing comprises a stirring treatment.

11. The homogenization method for a positive electrode material according to claim 10, wherein the stirring treatment has a revolution speed of 10 to 60 rpm, a rotation speed of 2500 to 5000 rpm and a vacuum degree of < -80 kPa; and a duration of the stirring treatment is 50 to 120 min.

12. The homogenization method for a positive electrode material according to claim 1, wherein in step S4, the positive electrode paste has a solid content of 65% to 70%; and/or, a fineness of the positive electrode paste is < 10.
